# EUROPÄISCHE PATENTSCHRIFT

(11) **EP 1 091 638 B1**
(45) Veröffentlichungstag und Bekanntmachung des Hinweises auf die Patenterteilung: **23.07.2003**
(21) Anmeldenummer: 99939918.1
(22) Anmeldetag: 17.06.1999
(51) Int. Cl.: A01G 1/00

(54) **VEGETATIONSELEMENT ZUM AUFLEGEN AUF ERDGEBUNDENE FLÄCHEN**
VEGETATION ELEMENT FOR PLACING ONTO SOIL-BOUND SURFACES
ELEMENT VEGETAL DESTINE A ETRE PLACE SUR DES SURFACES LIEES A DE LA TERRE

(30) Priorität: 01.07.1998 DE 29811722 U
(43) Veröffentlichungstag der Anmeldung: 18.04.2001
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner
(86) Internationale Anmeldenummer: DE9901807
(87) Internationale Veröffentlichungsnummer: WO00001216

(56) Entgegenhaltungen:
- EP-A- 0 234 285
- DE-A- 2 055 733
- DE-A- 3 631 716
- DE-A- 3 828 843
- DE-U- 29 721 620
- DE-U- 29 811 722

## Beschreibung

Die Erfindung betrifft ein Vegetationselement zum Auflegen auf erdgebundene Flächen gemäß dem Oberbegriff des Schutzanspruchs 1.

Derartige, beispielsweise aus der DE 36 31 716 C2 bekannte Vegetationselemente werden in der Regel verwendet, um nicht erdgebundene Flächen, insbesondere Dächer, zu begrünen. Für diesen Anwendungsbereich haben sich derartige Vegetationselement seit langem bewährt. Bei der Begrünung von erdgebundenen Flächen, insbesondere von Straßenböschungen und dergleichen, ist man bislang andere Wege gegangen, da die Verwendung der im Bereich der Dachbegrünung bekannten Vegetationsträger zur Begrünung insbesondere von Straßenböschungen problematisch ist. Dies liegt vor allem daran, daß die bekannten Vegetationselemente relativ teuer sind. Zudem befinden sich in erdgebundenen Flächen stets Saatgutreserven und wachstumsfähige Pflanzenteile von unerwünschten Pflanzenarten, welche nach Beginn des Keimungsprozesses aus dem Boden nach oben in das Vegetationselement eindringend wachsen und die im Vegetationselement enthaltenen Sämereien und keimfähigen Pflanzenteile verdrängen. Durch diese unerwünschten Pflanzen können die Bemühungen zunichte gemacht werden, einen bestimmten Pflanzenbewuchs auf der zu begrünenden erdgebundenen Fläche zu schaffen.

Zur Vermeidung eines unerwünschten Pflanzenbewuchses hat man sich bislang damit beholfen, chemisch oder mechanisch gegen unerwünschte Pflanzenarten vorzugehen. So wurde versucht, mit chemischen Mitteln vor dem eigentlichen Aufbringen des Vegetationselements im mineralischen Boden vorkommende Pflanzenarten abzutöten. Ein derartiges Verfahren ist jedoch teuer, nicht lange wirksam und schon aus Umweltschutzgründen nicht mehr vertretbar. Bei mechanischen Vorgehensweisen wird auf die erdgebundene Fläche eine lichtundurchlässige Folie aufgelegt, durch welche die unerwünschten Pflanzenarten nicht durchdringen können. Auf diese Kunststoffolie wird dann das unbegrünte Vegetationselement aufgelegt.

Nachteilig ist hierbei aber, daß es sich bei diesen Folien bislang um nicht verrottbare Kunststoffolien gehandelt hat, welche zum einen teuer sind und zum anderen nach einer gewissen Zeit als Abfall anfallen. Auch dies ist heutzutage aus Umweltschutzgründen nicht hinnehmbar. Ein unbegrüntes Vegetationselement birgt zudem die Gefahr, daß sich in dieses unerwünschte Pflanzenkeime oder keimfähiges Pflanzenmaterial einnisten kann, beispielsweise in Form von Flugsamen, Sporen und dergleichen. Hierdurch wird die Wirkung der Kunststoffolie zumindest gemindert, wenn nicht gar gänzlich aufgehoben.

Aufgabe der Erfindung ist es daher, ein Vegetationselement zum Auflegen auf erdgebundene Flächen zu schaffen, welches einen unerwünschten Anwuchs von Pflanzen sicher verhindert, welches umweltschonend ist, und welches preiswert herzustellen und zu verlegen sein soll.

Diese Aufgabe wird mit einem Vegetationselement der eingangs genannten Art gelöst, welches die Merkmale des kennzeichnenden Teils des Schutzanspruchs 1 aufweist.

Erfindungsgemäß ist beim Vegetationselement zum Auflegen auf erdgebundene Flächen vorgesehen, daß die Unterseite der Trägerschicht mit einer Folie zur Auflage auf die erdgebundene Fläche verbunden ist, wobei die Folie Perforationen aufweist und wobei die Folie aus einem Material besteht, welches die kontrollierte Zersetzung der Folie durch natürliche Zersetzungsprozesse innerhalb eines Zeitraums von einem Monat bis 36 Monaten gewährleistet, und daß das Vegetationselement durch gärtnerische Maßnahmen fertig begrünt ist.

Kerngedanke der Erfindung ist, ein an sich bekanntes begrünbares Vegetationselement mit einer perforierten Folie aus einem verrottbaren Material zu verbinden und vor dem Auflegen auf die erdgebundene Fläche durch gärtnerische Maßnahmen fertig zu begrünen. Hierdurch lassen sich auf überraschend einfache Weise eine Reihe von Vorteilen erzielen. Die Perforationen in der Folie gewährleisten zum einen, daß die in der Trägerschicht befindlichen Pflanzen, Pflanzenteile oder Sämereien durch die Folie in die erdgebundene Fläche einwachsen können, und zum anderen gewährleistet die Folie, daß keine in dem Erdmaterial befindlichen unerwünschten Pflanzen nach oben in das Vegetationselement einwachsen können. Zwar ist es theoretisch denkbar, daß die im Erdreich angesiedelten Pflanzen durch die Perforation nach oben wachsen könnten, jedoch müßten sich diese Pflanzen genau unter den Perforationen befinden, was sehr unwahrscheinlich ist. Insgesamt sind die Perforationen nämlich so klein, daß sichergestellt ist, daß kein Licht, welches den Wuchs von unerwünschten Pflanzen fördern könnte, durch das Vegetationselement auf das Erdreich einfallen kann.

Da das erfindungsgemäße Vegetationselement vor dem Auflegen auf die erdgebundene Fläche durch gärtnerische Maßnahme fertig begrünt wurde, ist sichergestellt, daß nahezu die gesamte Oberfläche des Vegetationselements von einer aus den gewünschten Pflanzenarten gebildeten Pflanzendecke bedeckt ist. Hierdurch kann der Gefahr begegnet werden, daß unerwünschte Pflanzenarten durch Flugbesamung oder auf andere Weise in das Vegetationselement eindringen und Wuchsraum okkupieren. Denn da sich durch die gärtnerische Maßnahme bereits eine Pflanzendecke mit gewünschten Arten ausgebildet hat, wird es später in das Vegetationselement eingedrungenen unerwünschten Pflanzenarten schwerfallen, sich gegen den Konkurrenzdruck der vollständig ausgebildeten, vitalen Pflanzen durchzusetzen.

Unter gärtnerischer Maßnahme ist hier zu verstehen, daß das Vegetationselement vor dem Aufbringen auf die erdgebundene Fläche an anderer Stelle, beispielsweise in einem Anzuchtbetrieb, durch gärtnerische Tätigkeiten gezielt auf die gewünschten Pflanzenarten hergerichtet wurde, das heißt, gedüngt und gewässert wurde, wobei zu den gärtnerischen Maßnahmen auch gehört, daß eventuell vorhandener Fremdbewuchs, welcher sich spontan gebildet haben kann, entfernt wurde.

Ferner ist ein Verdienst der Erfindung darin zu sehen, daß sie sich die überraschende Erkenntnis zu Nutze macht, daß die Folie selbst nur für einen relativ kurzen Zeitraum benötigt wird, nämlich für den kritischen Zeitraum, in welchem die im Vegetationselement angeordneten Pflanzenteile noch nicht oder gerade erst beginnen, in das Erdreich einzuwachsen. Nur in diesem kritischen Zeitraum ist es nötig, den Boden lichtdicht abzudecken, damit kein unerwünschtes Pflanzenmaterial aus dem Boden nach oben wächst.

Nach der kritischen Anwuchsphase ist die Folie nicht mehr nötig. Theoretisch könnte man jetzt die Folie entfernen, was jedoch nicht durchführbar ist. Dadurch, daß sich die Folie durch die natürlichen Zersetzungsprozesse gewissermaßen selber zerstört, wird diese theoretische Möglichkeit des Entfernens der Folie nach der kritischen Anwuchsphase erstmalig realisierbar. Mit dieser zersetzbaren Folie werden also dynamische Zersetzungs- und Verrottungssprozesse der Natur nachgeahmt.

Je nach verwendetem Material für die Folie kann der Zeitraum der Verrottung eingestellt werden. Da das Vegetationselement vor dem Auflegen auf die erdgebundene Fläche durch gärtnerische Maßnahmen fertig begrünt ist, kann es nötig sein, ein Material zu wählen, welches erst nach etwa einem Jahr anfängt, sich zu zersetzen. Wird das keimfähige Pflanzenmaterial in Form von Samen, Sprossen, Sporen oder dergleichen erst kurz vor dem Auflegen des Vegetationselements zusammen mit den Substraten in und auf das Vegetationselement ein- und aufgebracht, kann ein Material für die Folie gewählt werden, das sich innerhalb eines kürzeren Zeitraums zersetzt. Denkbar ist hier ein Zeitraum von etwa 4 Monaten.

In praktischen Ausgestaltungen der Erfindung ist vorgesehen, daß das Material der Folie aus nachwachsenden Rohstoffen, insbesondere aus Pflanzenstärke oder aus schnell zersetzenden Polyolefinen gebildet ist. Wie oben ausgeführt, hängt die Wahl des geeigneten Materials von dem gewünschten Zersetzungszeitraum ab.

In einer vorteilhaften Ausgestaltung der Erfindung ist vorgesehen, daß an der Oberseite der Trägerschicht ein Gittergewebe angeordnet ist, welches mit der Folie mechanisch, insbesondere durch Fäden mittels eines Kettelstiches, verbunden ist. Hierdurch wird ein fester, sandwhichartiger Verbund von Trägerschicht, Folie und Gittergewebe ermöglicht.

In einer weiteren vorteilhaften Ausgestaltung der Erfindung ist vorgesehen, daß die Trägerschicht aus Kokosfasern besteht, welche zumindest teilweise durch ein Bindemittel, insbesondere Latex, miteinander und mit der Folie verklebt sind. Durch dieses Bindemittel, insbesondere durch Latex, wird zum einen ein fester Halt der Folie an der Trägerschicht gewährleistet, und zum anderen sorgt das Bindemittel dafür, daß sich die Fasern der Trägerschicht, insbesondere wenn die Fasern Kokosfasern sind, langsamer abbauen. Der Auftrag des Bindemittels kann dabei soweit gehen, daß mehr oder weniger sämtliche Fasern der Trägerschicht mit dem Bindemittel vernetzt und auch miteinander verklebt sind.

In einer weiteren vorteilhaften Ausgestaltung der Erfindung ist vorgesehen, daß die Grundfläche der Folie größer ist als die Grundfläche der Trägerschicht. Hierbei stehen also Seitenkanten der Folie über Seitenkanten der Trägerschicht hervor. Diese Maßnahme dient dazu, bei Verlegung von mehreren Vegetationselementen einen Überlappungsbereich zu schaffen, wo Seitenkanten der Trägerschichten aneinander anstoßen und Seitenkanten der Folien einander überlappen. Schrumpft der Vegetationsträger infolge von Trockenheit, könnten nämlich zwischen zwei benachbarten Vegetationselementen Lücken entstehen, welche optisch störend wirken könnten, und zudem die Gefahr bilden, daß durch diese Lücken Licht auf die erdgebundene Fläche einfällt. Die Überlappungsbereiche der Folien verhindern diese Gefahr.

Weitere vorteilhafte Ausgestaltungen ergeben sich aus der nachfolgenden Beschreibung von Ausführungsbeispielen des erfindungsgemäßen Vegetationselementes, der Zeichnung und der Schutzansprüche.

In der Zeichnung zeigen:
- Fig. 1: ein erstes Ausführungsbeispiel eines erfindungsgemäßen Vegetationselements im Querschnitt, und
- Fig. 2: ein zweites Ausführungsbeispiel eines erfindungsgemäßen Vegetationselementes im Querschnitt.

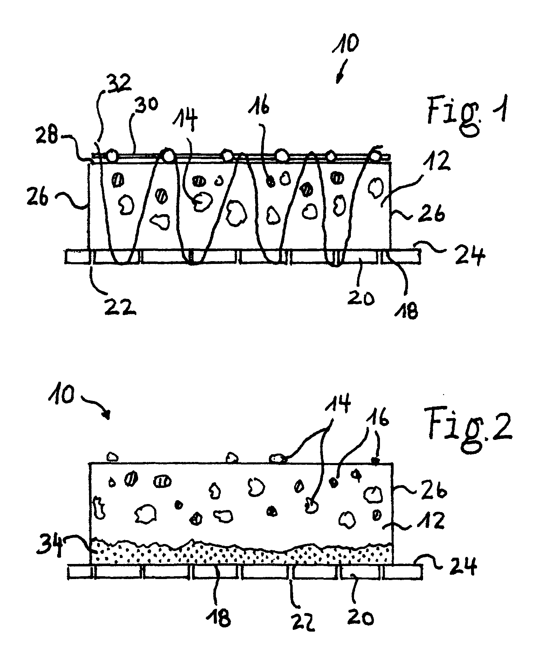

In Fig. 1 ist ein erstes Ausführungsbeispiel eines erfindungsgemäßen Vegetationselementes 10 dargestellt. Dieses weist eine Trägerschicht 12 auf, welche aus ineinander gewirrten Kokosfasern besteht. In den Vegetationsträger ist nur angedeutetes Substrat 14 und ebenfalls nur angedeutetes keimfähiges Pflanzenmaterial 16 eingebracht. Bei dem Pflanzenmaterial 16 kann es sich um Samen, Sprossen, Sporen und dergleichen handeln. An der Unterseite 18 der Trägerschicht 12 ist eine verrottbare Folie 20 angeordnet, welche Perforationen 22 aufweist. Im gezeigten Ausführungsbeispiel weist die Folie 20 Überlappungsbereiche 24 auf, welche über Seitenkanten 26 der Trägerschicht 12 überstehen. Auf die Oberseite 28 der Trägerschicht 12 ist ein Gittergewebe 30 aufgelegt. Dieses Gittergewebe 30 kann aus Jute, Hanf oder aus einem Polyolefin bestehen. Das Gittergewebe 30 ist mit der Trägerschicht 12 und mit der Folie 20 durch Fäden 32 mittels eines Kettelstiches mechanisch verbunden. Diese Fäden 32 sichern einen festen mechanischen Halt der einzelnen Schichten des Vegetationselementes 10.

In Fig. 2 ist eine zweite Ausführungsform des erfindungsgemäßen Vegetationselementes 10 dargestellt. Dieses entspricht weitgehend dem in Fig. 1 dargestellten Ausführungsbeispiel, jedoch ist hier die Folie 20 durch ein Bindemittel 34 mit der Unterseite 18 der Trägerschicht 12 verklebt. In dem in Fig. 2 dargestellten Ausführungsbeispiel weist die Schicht des Bindemittels 34 nur eine relativ geringe Schichtdicke auf, das Bindemittel 34 kann aber auch so aufgetragen werden, daß es sämtliche Fasern der Trägerschicht 12 benetzt und miteinander verklebt, wobei jedoch gewährleistet bleiben muß, daß genügend Hohlräume in der Trägerschicht 12 verbleiben, die ein Eindringen von Substrat 14 und Pflanzenmaterial 16 in die Trägerschicht 12 gestatten.

## Patentansprüche

1. Vegetationselement (10) zum Auflegen auf erdgebundene Flächen, wie Böschungen von Straßen und dergleichen, bestehend aus einer Trägerschicht (12) aus verrottbaren Fasern, insbesondere aus Kokosfasern, wobei in die Trägerschicht (12) Substrate (14) und keimfähiges Pflanzenmaterial (16) ein- und aufbringbar ist, **dadurch gekennzeichnet, daß** die Unterseite (18) der Trägerschicht (12) mit einer Folie (20) zur Auflage auf die erdgebundene Fläche verbunden ist, wobei die Folie Perforationen (22) aufweist und wobei die Folie (20) aus einem Material besteht, welches die kontrollierte Zersetzung der Folie (20) durch natürliche Zersetzungsprozesse innerhalb eines Zeitraums von einem Monat bis 36 Monaten gewährleistet und daß das Vegetationselement (10) durch gärtnerische Maßnahmen fertig begrünt ist.

2. Vegetationselement nach Anspruch 1, **dadurch gekennzeichnet, daß** das Material der Folie (20) aus nachwachsenden Rohstoffen gebildet ist.

3. Vegetationselement nach Anspruch 2, **dadurch gekennzeichnet, daß** das Material der Folie (20) aus Pflanzenstärke gebildet ist.

4. Vegetationselement nach Anspruch 2, **dadurch gekennzeichnet, daß** das Material der Folie (20) aus schnell zersetzenden Polyolefinen gebildet ist.

5. Vegetationselement nach einem der Ansprüche 1 - 4, **dadurch gekennzeichnet, daß** an der Oberseite (28) der Trägerschicht (12) ein Gittergewebe angeordnet ist, welches mit der Folie (20) mechanisch, insbesondere durch Fäden (32) mittels eines Kettelstiches, verbunden ist.

6. Vegetationselement nach einem der Ansprüche 1 - 4, **dadurch gekennzeichnet, daß** die Trägerschicht (12) aus Kokosfasern besteht, welche zumindest teilweise durch ein Bindemittel (34), insbesondere Latex, miteinander und mit der Folie (20) verklebt sind.

7. Vegetationselement nach einem der Ansprüche 1 - 6, **dadurch gekennzeichnet, daß** die Grundfläche der Folie (20) größer ist als die Grundfläche der Trägerschicht (12).

## Claims

1. Vegetation element (2) for laying on soil-bonded surfaces such as embankments of roads and similar, consisting of a carrier layer (12) of decomposable fibres, in particular coconut fibres, where in or on the carrier layer (12) can be inserted or applied substrate (14) and germinatable plant material (16), **characterised in that** the underside (18) of the carrier layer (12) is connected with a film (20) for laying on the soil-bonded surface, where the film has perforations (22) and where the film (20) consists of a material which guarantees the controlled decomposition of the film (20) by natural decomposition processes within a period from one month to 36 months, and that the vegetation element is ready-grassed by cultivation.

2. Vegetation element according to claim 1, **characterised in that** the material of the film (20) is formed of secondary-growing raw materials.

3. Vegetation element according to claim 2, **characterised in that** the material of the film (20) is formed from vegetable starch.

4. Vegetation element according to claim 2, **characterised in that** the material of the film (20) is formed from rapidly decomposing polyolefins.

5. Vegetation element according to any of claims 1 to 4, **characterised in that** on the top (28) of the carrier layer (12) is arranged a mesh which is connected to the film (20) mechanically, in particular by threads (32) by means of a stapling stitch.

6. Vegetation element according to any of claims 1 to 4, **characterised in that** the carrier layer (12) consists of coconut fibres which are glued at least partly by a bonding agent (34), in particular latex, together and with the film (20).

7. Vegetation element according to any of claims 1 to 6, **characterised in that** the area of the film (20) is larger than the area of the carrier layer (12).

## Revendications

1. Elément de végétation (10) destiné à la pose sur des surfaces de terre, telles que des talus et bords de routes ou des surfaces similaires, comprenant une couche porteuse (12) en fibres périssables, en particulier en fibres de coco, des substrats (14) et des matières végétales germinatives (16) pouvant être introduits dans la couche porteuse (12) ou appliqués sur celle-ci, **caractérisé en ce que** la face inférieure (18) de la couche porteuse (12) est reliée à une feuille (20) destinée à être posée sur la surface de terre, que la feuille présente des perforations (22) et qu'elle est en une matière garantissant une décomposition contrôlée de la feuille (20) par des processus de décomposition naturels en l'espace d'un mois à 36 mois et **en ce que** l'élément de végétation (10) est gazonné fini grâce à des soins de jardinage.

2. Elément de végétation suivant la revendication 1, **caractérisé en ce que** la matière de la feuille (20) est formée de matières premières qui repoussent.

3. Elément de végétation suivant la revendication 2, **caractérisé en ce que** la matière de la feuille (20) est formée de fécule végétale.

4. Elément de végétation suivant la revendication 2, **caractérisé en ce que** la matière de la feuille (20) est formée de polyoléfines à décomposition rapide.

5. Elément de végétation suivant une des revendications 1 à 4, **caractérisé en ce que** sur la surface (28) de la couche porteuse (12) est disposée une structure grillagée qui est reliée mécaniquement à la feuille (20), en particulier par des fils, au moyen d'un point de remmaillage.

6. Elément de végétation suivant une des revendications 1 à 4, **caractérisé en ce que** la couche porteuse (12) est en fibres de coco, qui sont collées au moins partiellement entre elles et à la feuille à l'aide d'un liant (34), en particulier à l'aide de latex.

7. Elément de végétation suivant une des revendications 1 à 6, **caractérisé en ce que** la surface de base de la feuille (20) est plus grande que la surface de base de la couche porteuse (12).
